# EUROPÄISCHE PATENTANMELDUNG

(11) **EP 2 651 000 A2**
(43) Veröffentlichungstag der Anmeldung: **16.10.2013**
(21) Anmeldenummer: 12160857.4
(22) Anmeldetag: 22.03.2012
(51) Int. Cl.: H02J 3/40, H02J 3/42

(54) **Verfahren zum Synchronisieren eines Generators mit einem Netz**

(71) Anmelder: Alstom Technology Ltd, 5400 Baden (CH)
(72) Erfinder: Hug, Roland, 8852 Altendorf (CH); Lüthi, Reto, 8050 Zürich (CH)

(57) **Zusammenfassung**

Ein Verfahren zum Synchronisieren eines Generators (10), der über einen Generatorschalter (13) mit einem Netz (11) verbindbar ist, wird durch die folgenden Schritte beschleunigt:
a) Hochfahren der Generatordrehzahl von einem Wert, der einer unterhalb der Netzfrequenz liegenden Frequenz entspricht, auf eine Synchronisationsdrehzahl, die dem Wert, der Netzfrequenz plus/minus einer Frequenzdifferenz zur Synchronisation (ΔF) entspricht;
b) Abwarten, bis der Phasenwinkel zwischen einander zugeordneten Phasenspannungen von Generator (10) und Netz (11) einen vorgegebenen Wert unterschreitet; und
c) Verbinden des Generators (10) mit dem Netz (11) durch Einschalten des Generatorschalters (13).

## Beschreibung

### TECHNISCHES GEBIET

Die vorliegende Erfindung bezieht sich auf das Gebiet der Stromerzeugung und - verteilung. Sie betrifft ein Verfahren zum Synchronisieren eines Generators mit einem Netz gemäss dem Oberbegriff des Anspruchs 1.

### STAND DER TECHNIK

Bei der Bereitstellung und Verteilung von Energie über grosse Stromnetze werden häufig Reserven bereitgestellt und vorgehalten, die bei einer plötzlich auftretenden Differenz zwischen Angebot und Nachfrage im Netz schnell zu- bzw. abgeschaltet werden können. Derartige Reserven sollen beispielsweise in der Lage sein, innerhalb von 10 min ans Netz gehen zu können und länger als 2 h Energie ans Netz abzugeben. Häufig werden derartige Reserven z.B. in Form von Gasturbinen bereitgestellt, die einen entsprechenden Generator antreiben.

Wichtig und gewünscht beim Zuschalten derartiger Reserven ist eine schnelle Synchronisation zwischen Gasturbine und Netz, um den zugehörigen Generator ohne Gefährdung der Anlage zuschalten zu können.

Aus der Druckschrift US 4,249,088 ist eine Steuerung für die Synchronisierung eines Generators mit einem Netz bekannt, bei welcher der Generator mit dem Netz verbunden wird, wenn sich die Phase, Spannung und der Schlupf innerhalb erlaubter Grenzen bewegen.

Weiterhin offenbart die Druckschrift US 7,915,868 B1 ein Verfahren zum synchronisieren eines Turbogenerators mit einem Netz, wobei beispielsweise die Spannungen von Generator und Netz angeglichen werden, bevor die antreibende Gasturbine während eines Anfahrvorgangs die ans Netz angepasste Geschwindigkeit erreicht.

Die bekannten Synchronisierungsverfahren haben den Nachteil, dass bei einer Annäherung der Generatordrehzahl von unten, wie sie beim Hochfahren der Turbine auftritt, im für das Zuschalten geeigneten Geschwindigkeitsbereich aufgrund der sehr geringen Geschwindigkeits- bzw. Frequenzdifferenz die Differenz der Spannungen zwischen Netz und Generator nach Art einer Schwebung mit der Einhüllenden vergleichsweise langsam zwischen Minimum (bei gleicher Phasenlage) und Maximum (bei entgegengesetzter Phasenlage) wechselt, so dass, wenn der Generator in einem Minimum der Phasenspannungs-Differenz und somit des Phasenwinkels zugeschaltet werden soll, vergleichsweise viel Zeit zwischen zwei aufeinanderfolgenden Minima bzw. bis zum nächsten Minimum vergeht.

Beträgt die Geschwindigkeits- bzw. Frequenzdifferenz bei einem 50 Hz-Netz beispielsweise 0,02 Hz (entspricht 0,04%), wird in der zugehörigen Schwebung alle 50 s ein Minimum der Phasenspannungs-Differenz erreicht, d. h. es kann bis zu 50 s dauern, bis eine Möglichkeit zur Synchronisierung besteht.

### DARSTELLUNG DER ERFINDUNG

Es ist eine Aufgabe der Erfindung, ein Verfahren zum Synchronisieren eines Generators mit einem Netz anzugeben, welches die Nachteile bekannter Verfahren vermeidet und eine deutlich schnellere Synchronisierung ermöglicht.

Diese und andere Aufgaben werden durch die Gesamtheit der Merkmale des Anspruchs 1 gelöst.

Das erfindungsgemässe Verfahren zeichnet sich durch die folgenden Schritte aus:
a) Hochfahren der Generatordrehzahl von einem Wert, der einer unterhalb der Netzfrequenz liegenden Frequenz entspricht, auf eine Synchronisationsdrehzahl die dem Wert der Netzfrequenz plus/minus einer maximal zulässigen Frequenzdifferenz zur Synchronisation entspricht;
b) Abwarten, bis der Phasenwinkel zwischen einander zugeordneten Phasenspannungen von Generator und Netz einen vorgegebenen Wert unterschreitet; und
c) Verbinden des Generators mit dem Netz durch Einschalten des Generatorschalters oder des Hochspannungsschalters.

Als eine unterhalb der Netzfrequenz liegende Drehzahl ist beispielsweise auch der Stillstand vor dem Anfahren einer Turbine zu verstehen. Weiter kann eine unterhalb der Netzfrequenz liegende Drehzahl z.B. die Drehzahl sein, mit der bei einer Gasturbine ein nachgeschalter Kessel gespült, d.h. eine Drehzahl zwischen 20 und 40% der Nenndrehzahl.

Durch die Synchronisationsdrehzahl kann eine grössere Geschwindigkeits- bzw. Frequenzdifferenz zwischen Turbine bzw. Generator und Netz vorgegeben werden, wodurch der Wechsel zwischen Minima und Maxima in der Schwebung der Spannungsdifferenz wesentlich schneller erfolgt und sich damit die Wiederholfrequenz der möglichen Synchronisierungs-Zeitpunkte deutlich erhöht.

Eine Ausgestaltung des erfindungsgemässen Verfahrens ist dadurch gekennzeichnet, dass die maximal zulässige Drehzahldifferenz zur Synchronisation so gewählt ist, dass innerhalb der Zeit, in die der Phasenwinkel zwischen einander zugeordneten Phasenspannungen von Generator und Netz lang genug unter dem vorgegebenen Wert zur Synchronisation bleiben, um den Generatorschalter zuverlässig zu schliessen. Die maximal zulässige Frequenzdifferenz zur Synchronisation ist von der Geschwindigkeit der Regelung und der Schliessgeschwindigkeit des Generatorschalters bzw. des Hochspannungsschalters abhängig.

Gemäss einer Ausgestaltung des erfindungsgemässen Verfahrens liegt die im ersten Schritt benutzte Frequenzdifferenz zur Synchronisation im Bereich zwischen 0,1 % und 1% der Netzfrequenz.

Vorzugsweise liegt die im ersten Schritt benutzte Frequenzdifferenz zur Synchronisation im Bereich zwischen 0,2% und 0,7% der Netzfrequenz.

Besonders günstig ist es, wenn die im ersten Schritt benutzte Frequenzdifferenz zur Synchronisation ungefähr 0,5% der Netzfrequenz beträgt. Bei einer solchen Synchronisationsdrehzahl (von 0,25 Hz bei einem 50 Hz-Netz) beträgt der Abstand zwischen benachbarten Minima der Einhüllenden lediglich 4 s. Die Synchronisierung kann so mehr als 10-mal schneller erfolgen als beim eingangs genannten Beispiel.

Eine andere Ausgestaltung des erfindungsgemässen Verfahrens ist dadurch gekennzeichnet, dass der Generator eine zuschaltbare Generatorerregung aufweist, und dass die Generatorerregung bereits beim Hochfahren vor Erreichen der Synchronisationsdrehzahl eingeschaltet wird.

Es ist aber auch denkbar, dass der Generator eine zuschaltbare Generatorerregung aufweist, und dass die Generatorerregung nach Erreichen der Synchronisationsdrehzahl eingeschaltet wird.

Eine weitere Ausgestaltung des erfindungsgemässen Verfahrens ist dadurch gekennzeichnet, dass die Generatordrehzahl durch eine Messung der Drehzahl einer mit dem Generator verbunden Turbinenwelle und/oder durch eine Messung der Frequenz der Generatorspannung ermittelt und zur Synchronisation herangezogen wird.

Um beim Synchronisieren ein Leistungsrückfluss von dem Netz in den Generator zu vermeiden, wird nach einer Ausgestaltung des Verfahrens im ersten Schritt eine Synchronisationsdrehzahl angefahren, die höher ist, als eine Drehzahl, die der Netzfrequenz entspricht. Bevorzugt wird auf die Drehzahl beschleunigt, die um die maximal zulässige Drehzahldifferenz zur Synchronisation höher als die der Netzfrequenz entsprechende Drehzahl ist.

Typischerweise wird der Generator von einer Turbine angetrieben. Bis zur Synchronisation des Generators wird die Drehzahl des Generators über den Drehzahlregler der Turbine geregelt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein vereinfachtes Schema eines von einer Gasturbine angetriebenen, an ein Netz anschliessbaren Generators, wie er zur Durchführung des erfindungsgemässen Verfahrens geeignet ist;
- Fig. 2: die bei zwei Wechselspannungen mit leicht unterschiedlicher Frequenz (a) nach Art einer Schwebung oszillierende Amplitudendifferenz (b), die beim erfindungsgemässen Verfahren zur schnellen Synchronisation ausgenutzt wird; und
- Fig. 3: den Verlauf der Gasturbinen-Drehzahl im Vergleich zur Netzfrequenz bei einem Ausführungsbeispiel des erfindungsgemässen Verfahrens.

### WEGE ZUR AUSFÜHRUNG DER ERFINDUNG

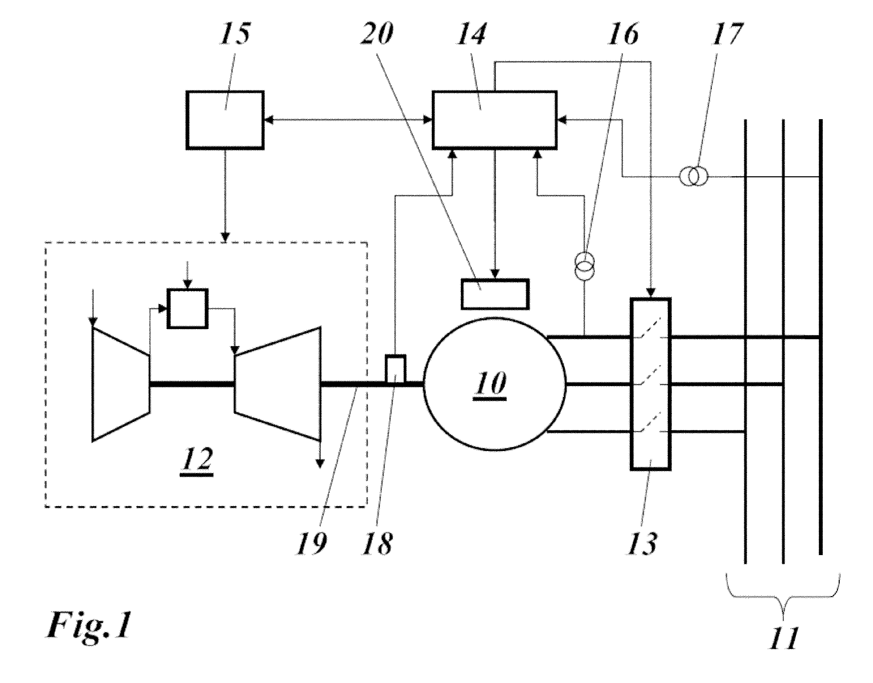

Fig. 1 zeigt ein vereinfachtes Schema eines von einer Gasturbine angetriebenen, an ein Netz anschliessbaren Generators, wie er zur Durchführung des erfindungsgemässen Verfahrens geeignet ist. Der (3-phasige) Generator 10 wird über eine Turbinenwelle 19 von einer Gasturbine 12 angetrieben, deren innerer Aufbau in Fig. 1 angedeutet ist, aber nicht mehr erläutert zu werden braucht. Für den Betrieb der Gasturbine 12 ist ein Gasturbinenregler 15 vorgesehen, der beispielsweise über die Brennstoffzufuhr und/oder die Stellung der eingangsseitigen Leitschaufelreihe des Verdichters den Betrieb der Gasturbine steuert und regelt.

Dem Generator 10 ist eine Generatorerregung 20 zugeordnet, die zur Steuerung der Stromerzeugung von einem Synchronisationsgerät 14 geregelt werden kann. Der Generator 10 ist über einen Generatorschalter 13 mit einem (3-phasigen) Netz 11 verbindbar. Der Generatorschalter 13 wird im Zusammenhang mit der Synchronisierung ebenfalls von dem Synchronisationsgerät 14 angesteuert. Für den Synchronisierungsvorgang gibt das Synchronisationsgerät 14 entsprechende Steuerungsbefehle an den Gasturbinenregler 15.

Dem Synchronisationsgerät 14 werden die Schwingungen der Netzspannung und der vom Generator 10 erzeugten Spannung als Eingangsgrössen zugeführt. Hierfür sind entsprechende Spannungswandler 16 und 17 vorgesehen. Anstelle von oder zusätzlich zu der Messung der Generatorspannung kann auch die Drehzahl der Turbinenwelle 19 über einen dort angebrachten Drehzahlaufnehmer 18 abgegriffen werden, um die Drehzahl des Generators 10 und die Frequenz dessen Spannung 16 gegenüber der Netzspannung zu überwachen und auszuwerten. Zusätzlich kann auch die Phasenlage zwischen Generator und Netzspannung auf der Generatorseite mit einem Positionsgeber auf der Welle überwacht und ausgewertet werden (beispielsweise mit einem "Phasengeber" als Positionsgeber).

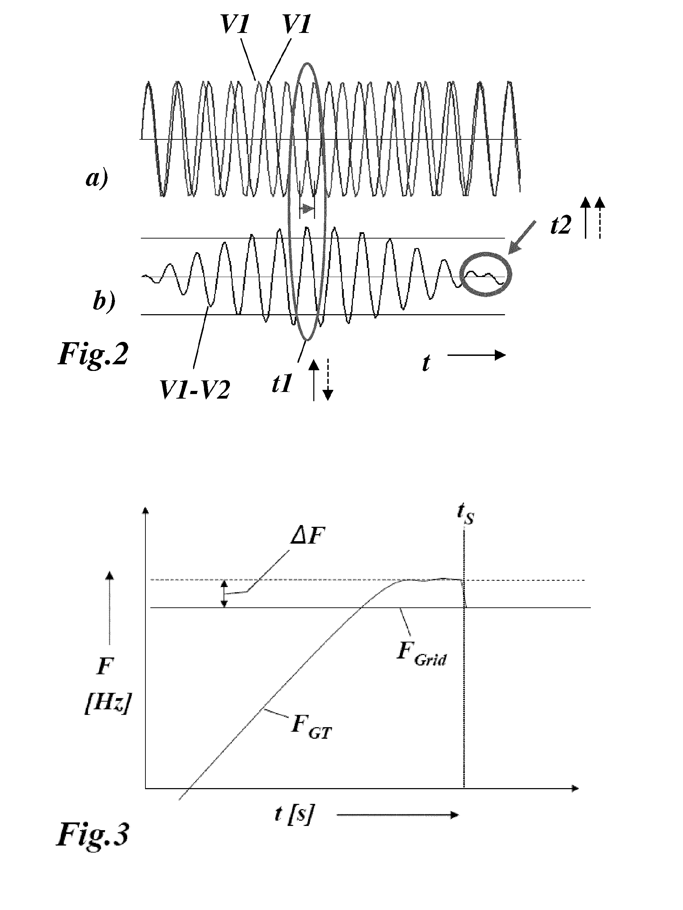

Das Verhältnis von Generatorspannung und Netzspannung bei Frequenzunterschieden ist in Fig. 2 dargestellt: wenn sich (hier bei gleicher Amplitude) die Frequenz der einen Spannung V1 von der anderen Spannung V2 nur geringfügig unterscheidet, wie dies im zeitlichen Signalverlauf der Fig. 2(a) wiedergegeben ist, zeigt die Differenz der beiden Spannungen V1-V2 ein Verhalten gemäss Fig. 2(b), d.h. sie verhält sich wie eine Schwebung, bei der die Einhüllende zwischen einem Maximum (zum Zeitpunkt t1; gegensinnige Phasenvektoren) und einem Minimum (zum Zeitpunkt t2; gleichsinnige Phasenvektoren) periodisch wechselt. Dieser Wechsel erfolgt - wie bei Schwebungen üblich - umso schneller, je grösser der Frequenzunterschied ist. Dieses Verhalten wird nun ausgenutzt, um die Synchronisierung zwischen Generator 10 und Netz 11 zu beschleunigen. Da ein Einschalten des Generatorschalters 13 immer nur dann ohne negativen Effekt möglich ist, wenn sich die Einhüllende der Schwebung in einem Minimum befindet bzw. die Phasendifferenz zwischen Generatorspannung und Netzspannung minimal ist (jeweils zum Zeitpunkt t2 in Fig. 2(b)), wird der Abstand zwischen den aufeinanderfolgenden Minimum-Zeitpunkten t2 klein gehalten, in dem die Frequenzdifferenz zwischen Generatorspannung und Netzspannung in der Wartezeit vor der Synchronisierung relativ gross, nämlich im Bereich zwischen 0,1 % und 1 %, besser noch zwischen 0,2% und 0,7%, insbesondere bei 0,5%, gewählt wird. Bei einer Netzfrequenz von 50 Hz beträgt dann die (maximale) Wartezeit zwischen aufeinanderfolgenden Minima der Schwebung nur 4 s.

Der gesamte Ablauf der Synchronisierung ergibt sich dann aus dem Diagramm der Fig. 3, wo beim Hochfahren der Gasturbine 12 ausschnittweise der zeitliche Verlauf der Gasturbinen-Drehzahl F_{G} relativ zur (konstanten) Netzfrequenz F_{Grid} aufgetragen ist. Zum Synchronisieren wird die Gasturbine 12 über die der Netzfrequenz entsprechenden Drehzahl hinaus vergleichsweise schnell auf Synchronisationsdrehzahl gebracht (Frequenzdifferenz AF=F_{G}-F_{Grid} z.B. gleich 0,5%) und dort durch entsprechende Regelung gehalten. Die Generatorphase "überholt" dann die Netzphase innerhalb kurzer Zeit. Wird zum Zeitpunkt t_{S} (Synchronisations-Zeitpunkt, t2 in Fig. 2(b)) das nächste Minimum in der Phasendifferenz erreicht (Phasenwinkeldifferenz Δα < ± 15°), kann der Generator 10 sicher mit dem Netz 11 verbunden werden.

Die Vorteile sind:
● Es ergibt sich so eine schnelle Synchronisation, da die Differenz aus Netzfrequenz und Generatorfrequenz hoch ist; woraus ein schneller Abgleich der Phasenwinkel folgt.
● Ausserdem muss nicht zuerst auf eine Drehzahl eingeregelt werden, die in einem sehr engen Drehzahlbereich nahe der Netzfrequenz liegt.

Das Einschalten der Generatorerregung 20 kann dabei vor Erreichen der Synchronisationsdrehzahl, d.h. schon beim Hochfahren der Gasturbine 12, erfolgen.

Es ist aber auch denkbar, dass erst nach dem Einregeln von Gasturbine 12 und Generator 10 auf Synchronisationsdrehzahl (stabile Drehzahl das Einschalten der Generatorerregung 20 erfolgt.

Wie bereits erwähnt wird die Gasturbinen- bzw. Generatordrehzahl alternativ oder in Kombination durch eine Drehzahlmessung (Drehzahlaufnehmer 18 auf Turbinenwelle 19 (ist zum Überdrehzahlschutz der Gasturbine vorhanden)) oder durch Frequenzmessung der Generatorspannung (Spannungswandler 16) gemessen.

Mit dieser gemessenen Drehzahl wird die Gasturbine 12 mittels des Gasturbinenreglers 15 bis zur Synchronisation geregelt.

Das Synchronisationsgerät 14 ist in dem Beispiel als separates Instrument gezeigt und beschrieben. Es kann aber genauso in der Turbinenreglung (beispielsweise der Gasturbinenregelung 15), einem Generatorregler oder einem übergeordneten Anlagenregler integriert sein.

Die Ausführungsbeispiele sind anhand von Gasturbinenanlagen ausgeführt worden. Analog kann ein von einer Dampfturbine, einer Hydroturbine oder ein beliebig anders angetriebener Generator nach dem vorgeschlagenen Verfahren synchronisiert werden.

Das beschriebene Verfahren ist ausserdem nicht auf die im Beispiel gezeigte Ausführung mit einem 3-Poligen Generator beschränkt. Es ist ebenso auf 6-Polige oder andere Mehrpolige Generatoren anwendbar.

### BEZUGSZEICHENLISTE

- 10: Generator
- 11: Netz
- 12: Gasturbine
- 13: Generatorschalter
- 14: Synchronisationsgerät
- 15: Gasturbinenregler
- 16, 17: Spannungswandler
- 18: Drehzahlaufnehmer
- 19: Turbinenwelle
- 20: Generatorerregung
- F_{G}: Generatordrehzahl
- F_{Grid}: Netzfrequenz
- ΔF: Frequenzdifferenz zur Synchronisation
- t1, t2: Zeitpunkt
- t_{S}: Synchronisations-Zeitpunkt
- V1,V2: Phasenspannung

## Patentansprüche

1. Verfahren zum Synchronisieren eines Generators (10), der über einen Generatorschalter (13) mit einem Netz (11) verbindbaren ist, **gekennzeichnet durch** die folgenden Schritte:
a) Hochfahren der Generatordrehzahl (F_{G}) von einem Wert, der einer unterhalb der Netzfrequenz (F_{Grid}) liegenden Frequenz entspricht, auf eine Synchronisationsdrehzahl, die dem Wert der Netzfrequenz (F_{Grid}) plus/minus einer maximal zulässigen Frequenzdifferenz zur Synchronisation (ΔF) entspricht;
b) Abwarten, bis der Phasenwinkel zwischen einander zugeordneten Phasenspannungen (V1, V2) von Generator (10) und Netz (11) einen vorgegebenen Wert unterschreitet; und
c) Verbinden des Generators (10) mit dem Netz (11) **durch** Einschalten des Generatorschalters (13).

2. Verfahren nach Anspruch 1, **dadurch gekennzeichnet, dass** die maximal zulässige Frequenzdifferenz zur Synchronisation (ΔF) so gewählt ist, dass innerhalb der Zeit, in die der Phasenwinkel zwischen einander zugeordneten Phasenspannungen (V1, V2) von Generator (10) und Netz (11) lang genug unter einem vorgegebenen Wert zur Synchronisation bleiben, um den Generator (10) mit dem Netz (11) durch Einschalten des Generatorschalters (13) zu verbinden.

3. Verfahren nach Anspruch 1 oder 2, **dadurch gekennzeichnet, dass** die im ersten Schritt benutzte Frequenzdifferenz zur Synchronisation (ΔF) im Bereich zwischen 0,1 % und 1 % der Netzfrequenz liegt.

4. Verfahren nach Anspruch 3, **dadurch gekennzeichnet, dass** die im ersten Schritt benutzte Frequenzdifferenz zur Synchronisation (ΔF) im Bereich zwischen 0,2% und 0,7% der Netzfrequenz liegt.

5. Verfahren nach Anspruch 4, **dadurch gekennzeichnet, dass** die im ersten Schritt benutzte Frequenzdifferenz zur Synchronisation (ΔF) ungefähr 0,5% der Netzfrequenz beträgt.

6. Verfahren nach einem der Ansprüche 1 bis 5, **dadurch gekennzeichnet, dass** der Generator (10) eine zuschaltbare Generatorerregung (20) aufweist, und dass die Generatorerregung (20) bereits beim Hochfahren vor Erreichen der Synchronisationsdrehzahl eingeschaltet wird.

7. Verfahren nach einem der Ansprüche 1 bis 6, **dadurch gekennzeichnet, dass** der Generator (10) eine zuschaltbare Generatorerregung (20) aufweist, und dass die Generatorerregung (20) nach Erreichen der Synchronisationsdrehzahl eingeschaltet wird.

8. Verfahren nach einem der Ansprüche 1 bis 7, **dadurch gekennzeichnet, dass** die Generatordrehzahl (F_{G}) durch eine Messung der Drehzahl einer mit dem Generator (10) verbunden Turbinenwelle (19) und/oder durch eine Messung der Frequenz der Generatorspannung ermittelt und zur Synchronisation herangezogen wird.

9. Verfahren nach einem der Ansprüche 1 bis 8, **dadurch gekennzeichnet, dass** die im ersten Schritt erreichte Synchronisationsdrehzahl höher ist, als eine Drehzahl, die der Netzfrequenz entspricht.

10. Verfahren nach einem der Ansprüche 1 bis 9, **dadurch gekennzeichnet, dass** der Generator (10) von einer Turbine (12) angetrieben wird.

11. Verfahren nach Anspruch 10, **dadurch gekennzeichnet, dass** die Drehzahl des Generators (10) bis zur Synchronisation über den Drehzahlregler der Turbine (12) geregelt wird.
